# EUROPEAN PATENT APPLICATION

(11) **EP 1 525 940 A1**
(43) Date of publication of application: **27.04.2005**
(21) Application number: 04023889.1
(22) Date of filing: 07.10.2004
(51) Int. Cl.: B23K 20/22, B23K 37/02, B23K 37/04, H05H 1/34, B23Q 1/00, B23K 7/00, B23K 7/10

(54) **Motion control device for a head of a machine for plasma cutting, oxygen cutting and the like**

(30) Priority: 21.10.2003 IT pd20030256
(71) Applicant: Promotec S.r.l., 35030 Selvazzano Dentro (Prov. of Padova) (IT)
(72) Inventor: Marcato, Paolo, 35037 Tramonte di Teolo Prov. of Padova (IT); Marcato, Leopoldo, 35031 Abano Terme Prov. of Padova (IT); Villa, Angelo, 23900 Lecco (IT)
(74) Representative: Modiano, Guido, Dr.-Ing.

(57) **Abstract**

A motion control device for a head of a machine for plasma cutting, oxygen cutting and the like, with means (11) for translational motion along three axes with numeric control, comprising a supporting body (12), which is connected, by way of first means (13) for rotation about a first axis (14), to an articulation body (15), which in turn is functionally connected to a cutting head (18) by way of second means (16) for rotation about a second axis (17) that is perpendicular to the first axis (14), the cutting head (18) being supplied by electrical connection means (19), means (20) for distributing cutting gas and means (21) for injecting water for cooling the head (18). The first axis (14) is perpendicular to a metal plate being machined. The electrical connection means (19), the cutting gas distribution means (20) and the cooling water injection means (21) are constituted by a rotary distribution unit for gas, water and electric power (22), in which the stator part (22a) is rigidly coupled to the supporting body (12) and the rotor part (22b) is rigidly coupled to the articulation body (15). The articulation body (15) can thus perform, about the first axis (14), rotations of more than 360°. Cables (25) for the flow of the electric power supply and tubular elements (26a, 26b) for conveying the cutting gas and the cooling water are provided between the rotor part (22b) and the head (18).

## Description

The present invention relates to a motion control device for a head of a machine for plasma cutting, oxygen cutting and the like.

This invention finds particular application in the bevel cutting of flat metallic materials, such as metal plates and parts formed by drawing.

Currently known motion control devices for a head of a machine for plasma cutting, oxygen cutting and the like generally comprise means for translational motion along three axes with numeric control, to which a supporting body is connected; the supporting body is connected to an articulation body by way of first means for rotation about a first vertical axis.

Such articulation body is in turn functionally connected to a cutting head by way of second means for rotation about a second axis that is perpendicular to the first axis.

The cutting head is supplied by electrical connection means, by means for distributing cutting gas, and by means for injecting water for cooling the head.

The first axis, which is vertical, is also substantially perpendicular to a metal plate being machined.

The electrical connection means, which comprise both the electrical power supply and the management of the signals that arrive from the position and/or speed sensors with which the head and its actuation systems are provided, are generally constituted by cables that are directly connected to the cutting head.

The same applies to the means for injecting water for cooling the head and to the means for distributing cutting gas, which are formed by tubular elements that are generally external to the supporting body and are directly connected to the cutting head.

Known motion control devices, although being used extensively in many machines for plasma cutting, oxygen cutting and the like, and although being highly appreciated because of their flexibility in application, have drawbacks.

The cables and tubular elements connected to the cutting head prevent the head from rotating through an angle of more than 360° about the first vertical axis, and likewise prevent it from rotating beyond a range comprised between +45° and -45° in total about the second axis, with consequent severe limitations of the working space of the cutting head.

Further, the intensive motion to which a cutting head is generally subjected leads to severe wear of said cables and tubular elements, with severe risks of malfunction of the cutting machine and consequent effects on the quality of the product and on the productivity of the machine.

For rotation about the second axis, the articulation body is generally formed by a vertical flat element, which is provided on one side with a gearmotor and on the opposite side with a circular arc-like slot that covers 90° (45° on one side and 45° on the opposite side).

The gearmotor moves the cutting head, which is arranged so that it can slide in said slot and can rotate with its tip around the second axis.

The articulation body thus configured is very heavy and bulky and limits the rotation of the head, as mentioned.

Moreover, known motion control devices for plasma cutting heads often do not provide monitoring of the undulation of the metal plate.

This prevents the machine from performing the best possible machining of the metal plate, because the exact position of the surface of the metal plate with respect to the head that must machine it is not shown.

The aim of the present invention is to provide a motion control device for a head of a machine for plasma cutting, oxygen cutting and the like that is capable of solving the problems and drawbacks revealed by known types of motion control device.

Within this aim, an object of the present invention is to provide a motion control device that allows the cutting head to perform rotations of more than 360° about a first vertical axis.

Another object of the present invention is to provide a motion control device that allows the cutting head to perform rotations of more than 360° about a second axis that is perpendicular to the first axis, so that it can perform vertical and undercut cutting operations.

Another object of the present invention is to provide a motion control device that is further capable of following the undulation of the metal plate, instantly optimizing the cutting parameters.

Another object of the present invention is to provide a motion control device that can be adapted easily to known types of means for translational motion provided with three axes with numeric control.

Another object of the present invention is to provide a motion control device that can be manufactured at low cost by assembling known components by means of known systems and technologies.

This aim and these and other objects that will become better apparent hereinafter are achieved by a motion control device for a head of a machine for plasma cutting, oxygen cutting and the like, with means for translational motion along three axes with numeric control, of the type that comprises a supporting body, which is connected, by way of first means for rotation about a first axis, to an articulation body, which in turn is functionally connected to a cutting head by way of second means for rotation about a second axis that is perpendicular to said first axis, said cutting head being supplied by electrical connection means, means for distributing cutting gas and means for injecting water for cooling said head, said first axis being perpendicular to a metal plate being machined, said device being characterized in that said electrical connection means, said cutting gas distribution means and said cooling water injection means are constituted by a rotary distribution unit for gas, water and electric power, in which the stator part is rigidly coupled to said supporting body and the rotor part is rigidly coupled to said articulation body, said articulation body being able to perform, about said first axis, rotations of more than 360°, cables for the flow of the electric power supply and tubular elements for conveying the cutting gas and the cooling water being provided between said rotor part and said head.

Further characteristics and advantages of the invention will become better apparent from the following detailed description of two preferred but not exclusive embodiments thereof, illustrated by way of non-limiting example in the accompanying drawings, wherein:

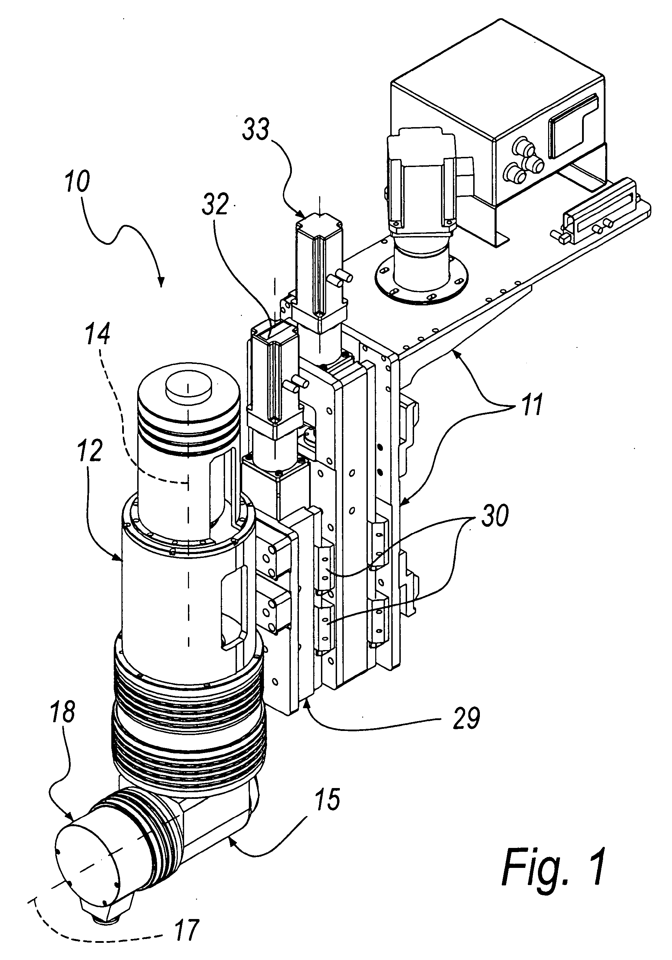

Figure 1 is a perspective view of a motion control device according to the invention;

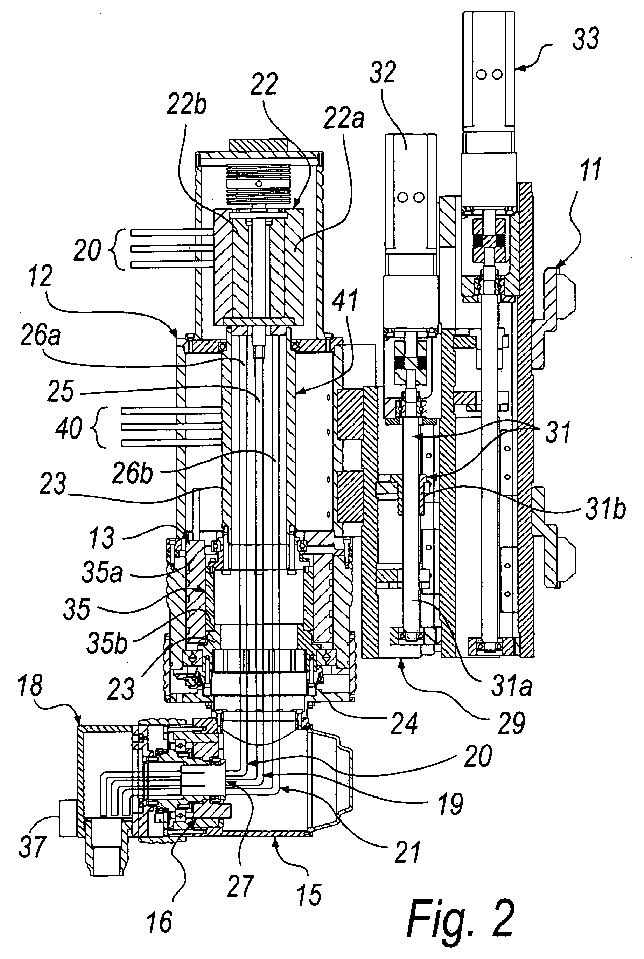

Figure 2 is a sectional side view of a motion control device according to the invention:

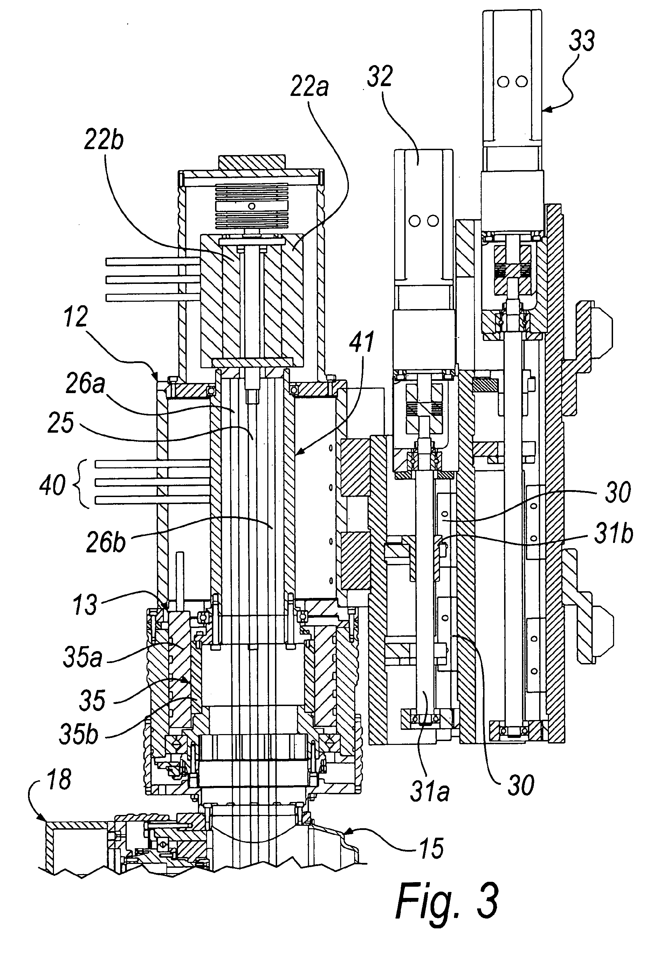

Figure 3 is a view of a detail of the cross-section of Figure 2;

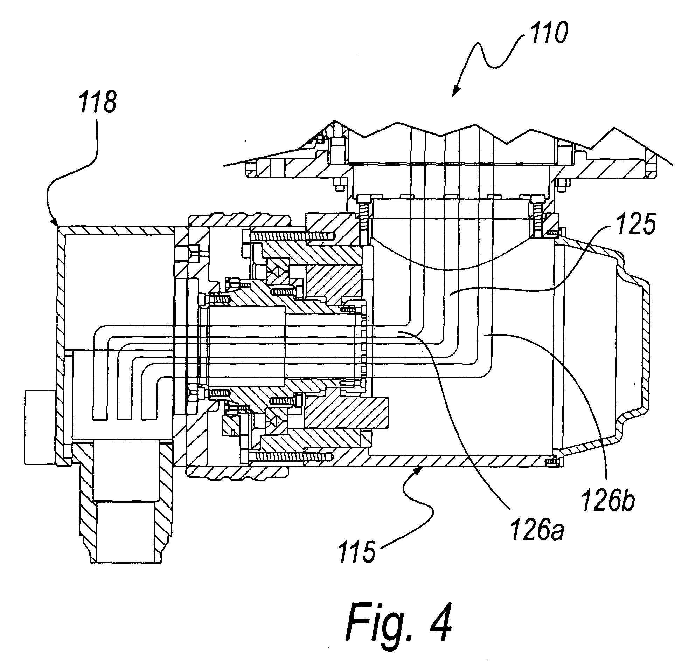

Figure 4 is a sectional view of a detail of a motion control device according to the invention, in a first embodiment;

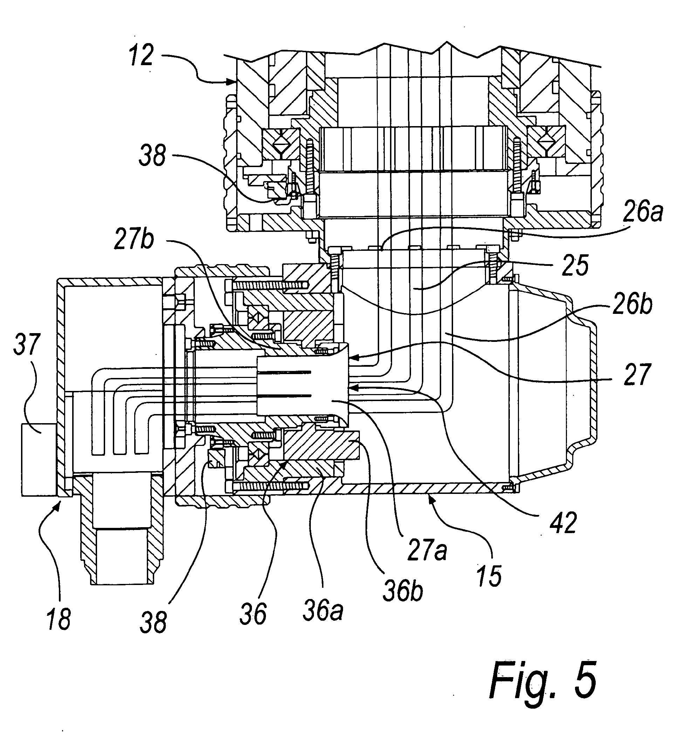

Figure 5 is a sectional view of a detail of a motion control device according to the invention, in a second embodiment.

With reference to the figures, a motion control device for a head of a machine for plasma cutting, oxygen cutting and the like according to the invention is generally designated by the reference numeral 10 in a first embodiment.

The device 10 comprises means 11 for translational motion along three axes with numeric control.

A supporting body 12 is associated with the translational motion means 11, of a per se known type, and is connected to an articulation body 15 by way of first means 13 for rotation about a first axis 14.

The articulation body 15 in turn is functionally connected to a cutting head 18 by way of second means 16 for rotation about a second axis 17 that is perpendicular to the first axis 14.

The cutting head 18 is supplied by electrical connection means 19, by cutting gas distribution means 20, and by means 21 for injecting water for cooling the head 18.

The first axis 14 is perpendicular to a metal plate being machined, which is not shown for the sake of convenience.

The device 10 is characterized in that the electrical connection means 19, the cutting gas distribution means 20 and the cooling water injection means 21, shown substantially schematically in the figures, are constituted by a first rotary distribution unit 22 for gas, water and electric power.

The first rotary distribution unit 22 is of a per se known type.

The first stator part 22a of the first rotary distribution unit 22 is rigidly coupled to the supporting body 12 and the first rotor part 22b thereof is rigidly coupled to the articulation body 15 by way of the interposition of a plurality of tubular components 23, which pass through the supporting body 12 and from which the articulation body 15 hangs in a lower region by means of a flange 24 for downward closure of the supporting body 12.

By way of the rotary distribution unit 22, the articulation body 15 can perform rotations of more than 360° about the first axis 14.

The electrical connection means 19, the cutting gas distribution means 20 and the cooling water injection means 21 are completed by providing, between the rotor part 22b and the head 18, cables 25 for the flow of the electric power supply and tubular elements 26a and 26b for conveying the cutting gas and the cooling water.

In this first embodiment, the electrical connection means 19, the cutting gas distribution means 20 and the cooling water injection means 21 comprise a second rotary distribution unit 27 for gas, water and electric power.

The second stator part 27a is rigidly coupled to the articulation body 15, while the second rotor part 27b is rigidly coupled to the cutting head 18.

Accordingly, the head 18 also can perform rotations of more than 360° about the second axis 17.

The cables 25 and the tubular elements 26a and 26b therefore connect the first rotor part 22b of the first rotary distribution unit 22 to the second stator part 27a of the second rotary distribution unit 27.

The supporting body 12 is connected to the means 11 for translational motion about three axes by way of additional means 28 for translational motion in the same direction as the first axis 14.

The additional translational motion means 28 are provided by a vertical slider 29, with which the supporting body 12 is rigidly coupled, said slider being arranged so that it slides between two pairs of mutually opposite guides 30.

The slider 29 is motorized by means of a ballscrew mechanism 31 driven by a linear gearmotor 32.

The ballscrew 31a and the gearmotor 32 are rigidly coupled to the assembly 33 for the vertical translational motion of the means 11 for translational motion on three axes.

The worm screw 31b of the ballscrew mechanism 31 is instead rigidly coupled to the supporting body 12.

The first rotary motion means 13 are constituted by a first torque motor 35, in which the first stator 35a is rigidly coupled to the supporting body 12 while the first rotor 35b is rigidly coupled to the articulation body 15.

The second rotary motion means 16 are constituted by a second torque motor 36, in which the second stator 36a is rigidly coupled to the articulation body 15 while the second rotor 36b is rigidly coupled to the head 18.

The motion control device 10 further comprises sensors, designated respectively by the reference numerals 37 and 38, for detecting the distance of the plate being machined from the head 18 and the angular positions of the articulation body 12 and of the head 18, and elements 40 for conveying the sensor pulses that arrive from the sensors 37 and 38.

The sensors 37 for detecting the distance of the plate being machined from the head 18 are at least one chosen among a capacitive sensor, an inductive sensor, and a cutting arc voltage sensor.

The sensors 37 allow the device 10, by means of the slider 29, to follow the undulation of the metal plate, thus achieving an improvement in cutting performance both in terms of machining quality and in terms of efficiency.

The elements 40 for conveying the sensor pulses comprise a rotary signal distribution unit 41, which is provided in the supporting body 12 and is functionally connected to said head by means of electrical cables, which are not shown for the sake of convenience.

In this first embodiment, the elements 40 for conveying the sensor pulses comprise a further rotary signal distribution unit 42, which is provided inside the articulation body 15 and is functionally connected to the rotary signal distribution unit 41 by means of said electrical cables, which are not shown.

In a second embodiment of the motion control device, designated by the reference numeral 110, which is not required to have particular rotation angles, in any case lower than 360°, about the second axis 17, the head 118 and the articulation body 115 do not have, as their mutual interfaces, the second rotary distribution unit 27 for gas, water and electric power and the additional rotary signal distribution unit 42.

Instead of the distribution units 27 and 42, there are cables 125 for supplying electric power and tubular elements 126a and 126b that accordingly connect the first rotor part 22b of the first rotary distribution unit 22 directly to the head 118.

In practice it has been found that the invention thus described solves the problems noted in known types of motion control device for a head of a machine for plasma cutting, oxygen cutting and the like.

In particular, the present invention provides a motion control device that allows the cutting head to perform rotations of more than 360° about a first vertical axis.

Moreover, the present invention provides a motion control device that allows the cutting head to perform rotations of more than 360° about a second axis that is perpendicular to the first axis, so that it can perform bevel and undercut cutting operations.

Moreover, the present invention provides a motion control device that is further capable of following the undulation of the metal plate, instantaneously optimizing the cutting parameters.

Moreover, the present invention provides a motion control device that can be adapted easily to known types of translational motion means with three axes with numeric control.

Further, the present invention has provided a motion control device that can be manufactured at low cost by assembling known components by means of known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2003A000256 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A motion control device for a head of a machine for plasma cutting, oxygen cutting and the like, with means (11) for translational motion along three axes with numeric control, of the type that comprises a supporting body (12), which is connected, by way of first means (13) for rotation about a first axis (14), to an articulation body (15), which in turn is functionally connected to a cutting head (18) by way of second means (16) for rotation about a second axis (17) that is perpendicular to said first axis (14), said cutting head (18) being supplied by electrical connection means (19), means (20) for distributing cutting gas and means (21) for injecting water for cooling said head (18), said first axis (14) being perpendicular to a metal plate being machined, said device (10) being **characterized in that** said electrical connection means (19), said cutting gas distribution means (20) and said cooling water injection means (21) are constituted by a rotary distribution unit (22) for gas, water and electric power, in which the stator part (22a) is rigidly coupled to said supporting body (12) and the rotor part (22b) is rigidly coupled to said articulation body (15), said articulation body (15) being able to perform, about said first axis (14), rotations of more than 360°, cables (25) for the flow of the electric power supply and tubular elements (26a, 26b) for conveying the cutting gas and the cooling water being provided between said rotor part (22b) and said head (18).

2. The motion control device according to claim 1, **characterized in that** said electrical connection means (19), said cutting gas distribution means (20) and said cooling water injection means (21) comprise an additional rotary distribution unit (27) for gas, water and electric power, in which the stator part (27a) is rigidly coupled to said articulation body (15) while the rotor part (27b) is rigidly coupled to said cutting head (18), said head (18) being able to perform rotations of more than 360° about said second axis (17), said cables (25) and said tubular elements (26a, 26b) connecting said rotor part (22b) of said rotary distribution unit (22) to said stator part (27a) of said additional rotary distribution unit (27).

3. The device according to one or more of the preceding claims, **characterized in that** said supporting body (12) is connected to said means (11) for translational motion along three axes by way of additional means (28) for translational motion in the same direction as said first axis (14).

4. The device according to claim 3, **characterized in that** said additional translational motion means (28) are constituted by a slider (29), with which said supporting body (12) is rigidly coupled, said slider being arranged so that it slides in at least one pair of mutually opposite guides (30) and being motorized by means of a ballscrew mechanism (31), which is actuated by a linear gearmotor (32), the screw (31a) of said ballscrew mechanism (31) and said gearmotor (32) being rigidly coupled to the assembly (33) for the vertical translational motion of said means (11) for translational motion along three axes, the complementarily shaped worm screw (31 b) of said ballscrew mechanism (31) being rigidly coupled to said supporting body (12).

5. The device according to one or more of the preceding claims, **characterized in that** said first rotary motion means (13) comprise a torque motor (35), in which the stator (35a) is rigidly coupled to said supporting body (12) and the rotor (35b) is rigidly coupled to said articulation body (15).

6. The device according to one or more of the preceding claims, **characterized in that** said second rotary motion means (16) comprise an additional torque motor (36), in which the stator (36a) is rigidly coupled to said articulation body (15) and the rotor (36b) is rigidly coupled to said head (18).

7. The device according to one or more of the preceding claims, **characterized in that** it comprises sensors (37, 38) for detecting the distance of the metal plate being machined from said head (18) and the angular positions of said articulation body (15) and of said head (18), in addition to elements (40) for conveying the sensor pulses that arrive from said sensors (37, 38).

8. The device according to claim 7, **characterized in that** said elements (40) for conveying the sensor pulses comprise a rotary signal distribution unit (41), which is provided in said supporting body (12) and is functionally connected to said head by means of electrical cables.

9. The device according to claim 8, **characterized in that** said elements (40) for conveying the sensor pulses comprise an additional rotary signal distribution unit (42), which is provided inside said articulation body (15) and is functionally connected to said rotary signal distribution unit (41) by means of said electrical cables.

10. The device according to claim 7, **characterized in that** said sensors (37) for detecting the distance of the metal plate being machined from said head (18) are at least one chosen among a capacitive sensor, an inductive sensor, and a cutting arc voltage sensor.
